# EUROPEAN PATENT APPLICATION

(11) **EP 3 883 268 A2**
(43) Date of publication of application: **22.09.2021**
(21) Application number: 21163349.0
(22) Date of filing: 18.03.2021
(51) Int. Cl.: H04W 4/02, H04W 4/46

(54) **COMMUNICATION METHODS AND DEVICES**

(30) Priority: 20.03.2020 GB 202004102
(71) Applicant: Canon Research Centre France, 35510 Cesson-Sevigne (FR)
(72) Inventor: SEVIN, Julien, 35140 SAINT AUBIN DU CORMIER (FR); NASSOR, Eric, 35235 THORIGNE-FOUILLARD (FR); RUELLAN, Hervé, 35700 RENNES (FR)
(74) Representative: Santarelli

(57) **Abstract**

There is provided a communication method in an Intelligent Transport System, ITS, comprising ITS stations, the method comprising the following steps, at an ITS station:
receiving a Collective Perception Message, CPM, from another ITS station of the ITS, said CPM including a first set of Vulnerable Road Users, VRUs, the first set being associated with properties;
determining that the ITS station belongs to the first set of VRUs;
obtaining the properties of said first set of VRUs;
comparing the obtained properties with properties of the ITS station; and, as a result,
updating said first set of VRUs.

## Description

### FIELD OF THE INVENTION

The present invention relates generally to Intelligent Transport Systems (ITS) and more specifically to Cooperative Intelligent Transport Systems (C-ITS).

### BACKGROUND OF THE INVENTION

Intelligent Transport Systems (ITS) standards are developed by different organizations: the European Telecommunication Standards Institute (ETSI), the European Committee for Standardization (CEN), the International Organization for Standardization (ISO), the Society of Automotive Engineers (SAE).

ITS standards define a general architecture, specified in ETSI EN 302 665 and ISO 21217, defining in particular the notion of ITS stations (denoted ITS-S) which can be vehicles, Road Side Units (RSU), Vulnerable Road Users (VRU) carrying an ITS equipment (for instance included in a smartphone, a GPS, a smart watch or in a cyclist equipment), or any other entities or infrastructures equipped with an ITS equipment, as well as central subsystems (back-end systems and traffic management centers). ITSs may support various types of communications, for instance between vehicles (vehicle-to-vehicle (V2V), that refers in general to all kinds of road users, e.g. car-to-car) or between vehicles and fixed locations (vehicle-to-infrastructure (V2I) and infrastructure-to-vehicle (I2V), e.g., car-to-infrastructure) and are not restricted to road transport. For instance, an ITS may also deal with information related to rail, water and air transport, including navigation systems.

Cooperation within the ITS is achieved using exchange of messages (ITS message) between the ITS stations. These exchanges of messages are performed through wireless networks, referred to as V2X (for "vehicle" to any kind of devices) networks, examples of which may include 3GPP LTE- Advanced Pro, 3GPP 5G and IEEE 802.11p technology.

More specifically, ITS standards have specified several types of ITS messages to improve the awareness of the ITS Stations, in order to alert, inform and/or warn users and/or vehicles of a transport system. For instance, a Cooperative Awareness Message (CAM - as defined in the ETSI EN 302 637-2) may be sent by a vehicle ITS-S to share its current state (e.g. position, speed, length, width, angle). In another example, a Collective Perception Message (CPM - TS 103 324 (V0.0.15)) may be sent by an ITS station equipped with sensors, in order to share its perceived environment and notably a list of perceived objects (ITS stations or not) with their current state corresponding to notably their position, size, weight, speed, direction, orientation, confidence or class. For this last one (class), a specific category has been considered in the case of VRU offering the possibility to report a set of VRUs and not only a single VRU, the set being referred to as "VRU group".

Awareness of VRUs is also improved by the transmission of dedicated ITS messages referred to as VRU Awareness Message (VAM) defined in the standard ETSI TS 103 300-2 (current version V0.4.2). Typically, a VAM reports a list of information items relating to the current state of the emitting VRU ITS station (VRU ITS-S), referred to as "ego VRU ITS station", such as its position, type, size, weight, speed, direction or orientation. But it also has the possibility to report the current state of a set of VRUs containing its VRU ITS station. In such a case, the reporting is not individual but global, given the current state of the set of VRUs as its reference position, dimension and size (number of participants), the set being referred to as "VRU cluster".

Moreover, the reporting procedure follows some rules defined in the standard ETSI TS 103 300-2. In particular, it is based on the election of a dedicated VRU ITS-S, referred to as "VRU cluster head", which is in charge of managing a set of several VRUs. Only the VRU cluster head (or master) may be allowed to send VAM, and the other VRUs (VRU ITS-S) of the corresponding VRU cluster may stop emitting VAMs. A VAM sent by the VRU cluster head may contain a specific container including the current state of the VRU cluster.

Reporting a set of VRUs as a VRU group through CPM, or as a VRU cluster through VAM allows to reduce strongly the amount of communication and thus the resource usage (spectrum usage), which can be crucial in a crowded and/or sensitive location such as urban pedestrian crossing wherein 500 pedestrians may be present (use case considered in standard ETSI TR 103 300-1 - VRU awareness; Part 1: Use Cases definition).

In such a context, an objective of the invention is to further reduce the amount of communication and thus resource usage (spectrum usage) to report sets of VRUs.

### SUMMARY OF INVENTION

The present invention seeks to overcome the foregoing concerns.

In this context, according to a first aspect of the invention, there is provided a communication method in an Intelligent Transport System, ITS, comprising ITS stations, the method comprising the following steps, at an ITS station:
- receiving a VRU Awareness Message, VAM, sent by a VRU, the VAM describing a second set of VRUs; and,
- transmitting a Collective Perception Message, CPM, to other ITS stations of the ITS, including information on the second set of VRUs.
Advantageously, the amount of exchanged messages and thus resource usage (spectrum usage) to report sets of VRUs is reduced.

According to embodiments, the communication method further includes identifying a first set of Vulnerable Road Users, VRUs, from data captured by a sensor connected to or belonging to the ITS station; and the CPM further includes information on the first set of VRUs.

According to embodiments, said information includes a list of VRUs belonging to the first set and a list of VRUs belonging to the second set.

According to embodiments, the communication method further includes determining a distance between the first set and the second set of VRUs, wherein said information is based on the determined distance.

According to embodiments, the communication method further includes updating the description of the second set of VRUs based on the determined distance, wherein said information includes the updated description.

According to a second aspect of the invention, there is provided a communication method in an Intelligent Transport System, ITS, comprising ITS stations, the method comprising the following steps, at an ITS station:
- receiving a Collective Perception Message, CPM, from another ITS station of the ITS, said CPM including information on a second set of VRUs described by a VRU Awareness Message, VAM, sent by a VRU to the other ITS station; and,
- processing the received CPM.

According to embodiments, said information further includes a first set of Vulnerable Road Users, VRUs, identified from data captured by a sensor connected to or belonging to the other ITS stations.

According to embodiments, said information includes a list of VRUs belonging to the first set and a list of VRUs belonging to the second set.

According to embodiments, said information is based on a distance determined between the first set and the second set of VRUs.

According to embodiments, said information includes an updated description of the second set of VRUs, said update is based on the determined distance.

According to a second aspect of the invention, there is provided a communication method in an Intelligent Transport System, ITS, comprising ITS stations, the method comprising the following steps, at an ITS station:
- identifying a first set of Vulnerable Road Users, VRUs, from data captured by a sensor connected to or belonging to the ITS station;
- receiving a VRU Awareness Message, VAM, sent by a VRU, the VAM describing a second set of VRUs;
- integrating at some of the VRUs belonging to the second set in the first set of VRUs; and,
- updating the description of the first set of VRUs

According to a third aspect of the invention, there is provided a communication method in an Intelligent Transport System, ITS, comprising ITS stations, the method comprising the following steps, at an ITS station:
receiving a Collective Perception Message, CPM, from another ITS station of the ITS, said CPM including a first set of Vulnerable Road Users, VRUs , the first set being associated with properties;
determining that the ITS station belongs to the first set of VRUs ;
obtaining the properties of said first set of VRUs;
comparing the obtained properties with properties of the ITS station; and, as a result,
updating said first set of VRUs.

According to embodiments, the comparing step may comprise comparing the location of the ITS station with the location of the first set of VRUs and/or comparing the speed of the ITS station with the speed of the first set of VRUs.

According to embodiments, if the difference between the obtained properties and the properties of the ITS station is superior to a predetermined threshold, the updating may include leaving the first set of VRUs.

According to embodiments, the ITS station locally stores properties of the first set of VRUs to which it belongs, wherein if the difference between the obtained properties and the properties of the ITS station is inferior or equal to a predetermined threshold, the updating may include updating the locally stored properties with the properties values included in the CPM.

According to embodiments, the first set of VRUs may be represented by a VRU header, the VRU header being the only ITS station of the first set allowed to send a VRU Awareness Message, VAM, over the ITS.

According to embodiments, the CPM may further include a second set of Vulnerable Road Users, VRUs, identified from data captured by a sensor connected to or belonging to the other ITS station.

Another aspect of the invention relates to an ITS station of an Intelligent Transport System, the ITS station comprising a microprocessor configured for carrying out the steps of any method as defined above.

Another aspect of the invention relates to a computer program product for a programmable apparatus, the computer program product comprising a sequence of instructions for implementing any method as defined above, when loaded into and executed by the programmable apparatus.

Another aspect of the invention relates to a computer-readable storage medium storing instructions of a computer program for implementing any method as defined above.

### BRIEF DESCRIPTION OF THE DRAWINGS

Further advantages of the present invention will become apparent to those skilled in the art upon examination of the drawings and detailed description. Embodiments of the invention will now be described, by way of example only, and with reference to the following drawings, in which:
**Figure 1** illustrates a typical ITS system in which embodiments of the invention may be implemented;
**Figure 2** shows a schematic representation of the architecture of an ITS station according to embodiments of the present invention;
**Figure 3** describes the format of a Collective Perception Message (CPM) according to embodiments;
**Figure 4** describes the format of a VRU Awareness Message (VAM) according to embodiments;
**Figure 5** (including **Figures 5a and 5b****)** illustrates, using flowcharts, steps of a communication method for reporting a set of VRUs using a CPM according to first embodiments;
**Figure 6** (including **Figures 6a and 6b****)** illustrates, using flowcharts, steps of a communication method for reporting a set of VRUs using a CPM according to second embodiments;
**Figure 7** (including **Figures 7a and 7b****)** illustrates, using flowcharts, steps of a communication method for reporting a set of VRUs using a CPM according to third embodiments;
**Figure 8** (including **Figures 8a and 8b****)** illustrates, using flowcharts, steps of a communication method for reporting a set of VRUs using a VAM according to fourth embodiments.

### DETAILED DESCRIPTION

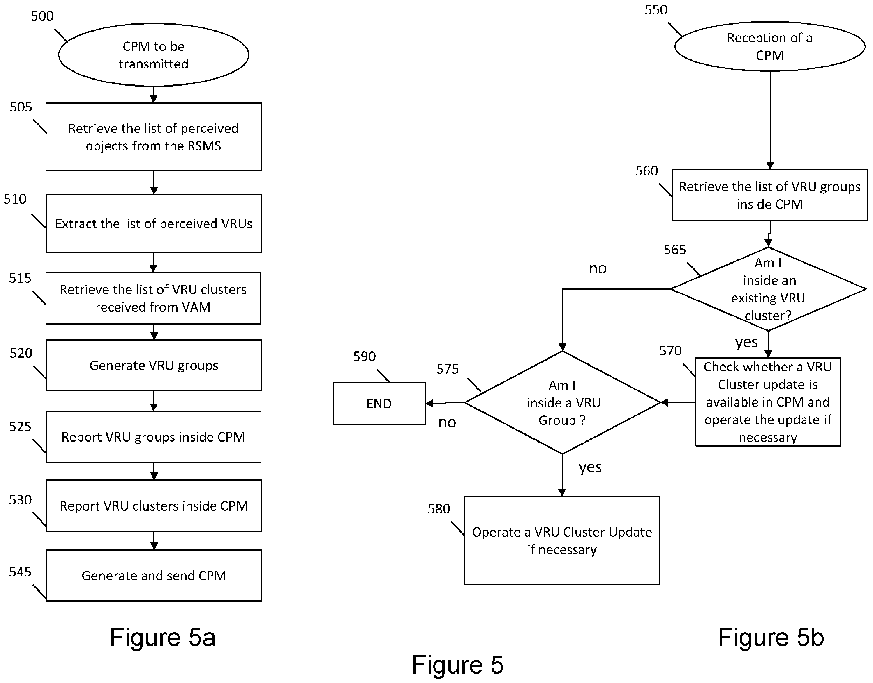

In the following description, the terms "ego VRU" may be used to refer to the considered VRU, i.e., the VRU performing the steps of one of the algorithms described with reference to Figures 5b, 6b, 7b, 8b.

In the following description, a set of VRUs directly identified from sensor data captured by the considered ITS-station is referred to as a "group of VRUs" by opposition to a set of VRUs reported in a VAM message received by the considered ITS-station (and thus not directly identified from its sensor data) which is referred to as a "cluster of VRUs".

In the following description, a VRU cluster or group is characterized by parameter(s) defining it (e.g., a cluster/group identifier and, in the case of a VRU cluster, a VRU cluster head) and its current state: size, dimension, speed and reference position.

More specifically, the size of a VRU cluster or VRU group may correspond to the number of VRUs inside the VRU cluster or group. The dimension of a VRU cluster/group may correspond to the geometry of a geographical area including at least the bounding boxes of all VRUs. For instance, in some embodiments, the geographical area is delimited by the smallest rectangle including all the VRUs. The speed a VRU cluster/group may correspond to the mean of the VRU speeds of the VRUs belonging to the VRU cluster/group. The reference position of a VRU cluster/group may correspond to the ground position at the center point of the face side of the first VRU bounding box, as defined in ETSI TS 103 300-2. The present invention is not limited thereto and other definitions may be used for defining the reference position, dimension and speed of a VRU cluster/group.

The same references are used to designate the same elements or steps appearing on different figures.

The names of the lists and elements (such as data elements) provided in the following description are only illustrative. Embodiments are not limited thereto and other names could be used.

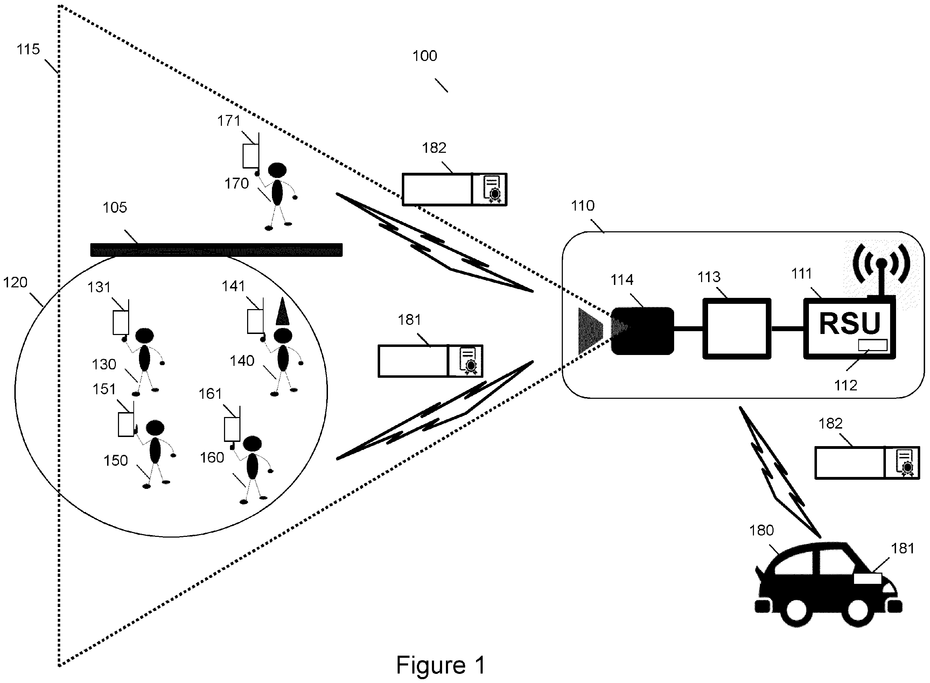

**Figure 1** illustrates a typical ITS system 100 in which embodiments of the invention may be implemented.

ITS 100 includes a set of VRUs 130, 140, 150, 160 and 170, a moving vehicle 180 and a fixed road side entity 110. VRUs 130, 140, 150, 160 and 170 contain respectively a Personal ITS-S (P-ITS-S) 131, 141; 151, 161 and 171 implemented for instance in a mobile phone. Moving vehicle 180 including a Vehicle ITS-S (V-ITS-S) 181. Fixed road side entity 110 contains in particular a Road Side Unit (RSU) 111 including a Roadside ITS Station R-ITS-S 112. The reference architecture of an ITS station (P-ITS-S, V-ITS-S and R-ITS-S) is defined in the version V1.1.1 of the ETSI EN 302 665 specification.

Within fixed road side entity 110, RSU 111 is wire-connected to a Roadside Surveillance Monitoring System (RSMS) 113. RSMS 113 includes in particular a set of perception sensors, here video camera 114 scanning (dashed) area 115, and a Video Content Analytics (VCA) module (not shown). The VCA module analyzes the stream captured by the sensors/video camera 114 in order to detect objects, referred to as "perceived objects", and outputs a list thereof with corresponding description information. As RSMS 113 and RSU 111 are wire connected, RSMS 113 is considered as an embedded perception sensor for RSU 111.

Cooperation within ITS 100 is achieved by the exchange of specific messages, ITS messages, among ITS stations, e.g., based on wireless networks, called V2X networks, examples of which may include 3GPP LTE- Advanced Pro, 3GPP 5G and IEEE 802.11p technology. Within ITS system 100, VRUs 130, 140, 150 and 160 are wirelessly connected (coverage area 120) and may communicate with each other. On the other hand, VRU 170 can't communicate with the other VRUs (130, 140, 150 and 160) due to an obstacle 105 which blocks the wireless communication, although it is close to them.

The set of VRUs 130, 140, 150 and 160 can generate a VRU cluster as defined in ETSI TS 103 300-2 (V0.4.2), e.g., with VRU 140 as the VRU cluster head. According to the Standard, it means in particular that the distance between VRUs is less than 3-5 meters and the speed difference between VRUs is less than 5%.

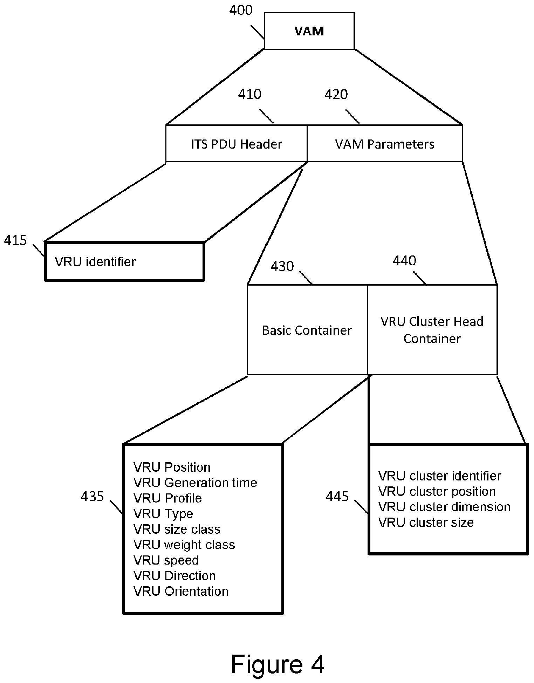

Only VRU 140 amongst VRUs 130, 140, 150 and 160 may be allowed to send a VAM 182. The format of a VAM is described with reference to Figure 4. In particular, VAM 182 may contain a VRU cluster Head Container which contains information on the VRU cluster including VRUs 130, 140, 150 and 160 as its reference position, its dimension and its size. On the other hand, as VRU 170 is isolated from the other VRUs, it is not part of the VRU cluster and may send its own VAM 182. VAM 182 may only contain a Basic Container 430 and not a VRU cluster Head Container 440.

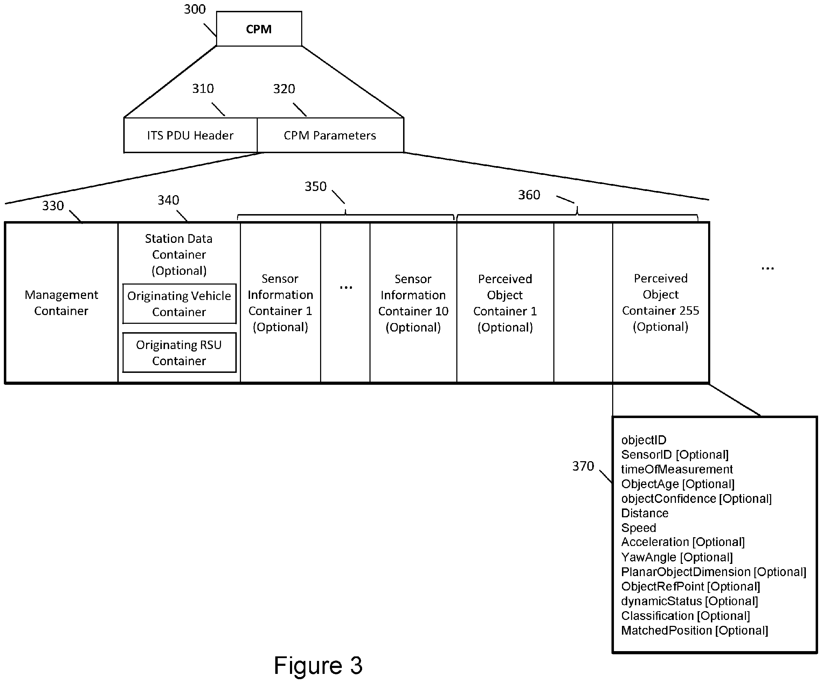

In an example, by scanning the area 115, RSMS 111 has captured a group of perceived "objects" corresponding to VRUs 130, 140, 150, 160 and 170. Such a group may be exchanged with the other ITS stations, such as the one of vehicle 180, and those of VRUs 130, 140, 150, 160 and 170 through a specific ITS message 182 referred to as Collective Perception Message (CPM), which is further described with reference to Figure 3. As described below, the CPM may provide a description information describing object(s) perceived by sensors , e.g., with their current state as their position, size, weight, speed, direction, orientation, confidence or class. Typically, a CPM may individually describe each perceived object. In the case of perceived VRUs, it also has the possibility to report a group of VRUs by using a dedicated class. In such a case, it means that the perceived objects are considered enough geographically close to be grouped. Within ITS 100, RSU has considered that the perceived VRUs by RSMS 113, VRU 130, VRU 140, VRU 150, VRU 160 but also VRU 170 are sufficiently close to be reported in a CPM 182 within a group and not individually, in order to reduce the size of the message (or the number of transmitted messages) and consequently the spectrum usage.

To summarize, in this example, the VRU cluster managed by VRU 141 differs from the group of VRUs perceived by RSMS 113, since VRU 170 does not belong to the VRU cluster managed by VRU 141, but belongs to the group perceived by RSMS 113.

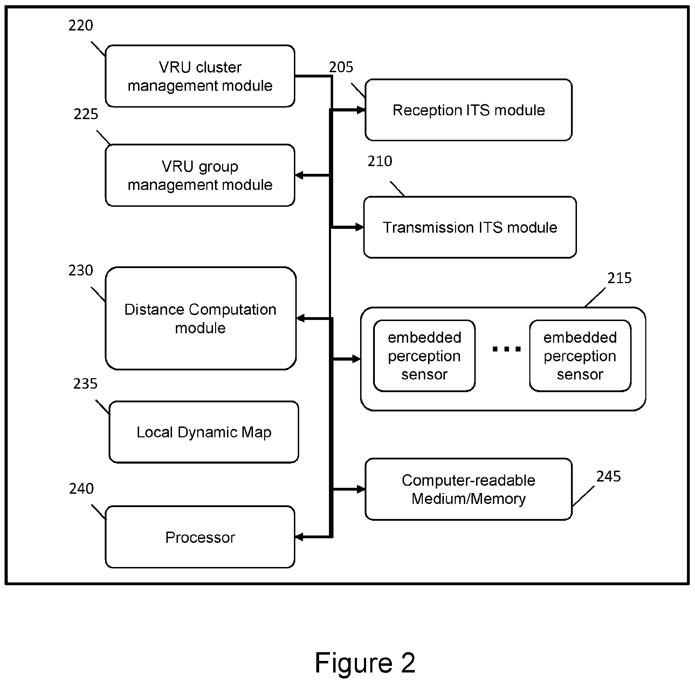

**Figure 2** shows a schematic representation of the architecture of an ITS station, according to embodiments of the present invention. It focuses on the modules necessary to implement embodiments of the invention.

An ITS station 200 includes a reception ITS module 205, a transmission ITS module 210, a set of embedded perception sensors 215, a VRU cluster management module 220, a VRU group management module 225, a distance computation module 230, a Local Dynamic Map 235, a processor module 240, a computer-readable medium/memory 245 and a transceiver 250.

The reception ITS module 205 receives ITS messages (as VAM or CPM) and decodes them by extracting ITS information. It may also perform security checks on the received ITS messages as checking their consistency, plausibility and integrity (see the liaison with security protocols) and destroy or store them according to previous operations results.

The transmission ITS module 210 encodes and transmits ITS messages (as VAM or CPM) in conformity to the message standard specification.

The set of embedded perception sensors 215 is a set of sensors, e.g., based on different technologies such as camera, radar, and/or lidar. Each one may detect objects referred to as perceived objects.

The Distance Computation module 230 may compute the distances between ITS stations as defined hereafter, this distance being used to operate the VRU cluster update operations. It may in particular be used by VRU cluster management module 220 and VRU group management module 230.

The VRU cluster management module 220 manages VRU cluster according to the standard ETSI TS 103 300-2 and according to the methods described in the present disclosure with reference to Figures 5, 6, 7 and 8.

The VRU group management module 225 manages VRU groups according to the methods described in the present disclosure with reference to Figure 5.

The Local Dynamic Map (LDM) 235 is a database containing topographical, positional and/or status information related to ITS stations within a geographic area surrounding the host ITS station. It may be defined in the version 1.1.1 of the ETSI TR 102 863 specification.

The processor 240 is responsible for global processing, including the execution of the software stored on the computer-readable Medium/Memory 245, the software implementing the methods described in the present disclosure with reference to Figures 5, 6, 7 and 8. The computer-readable Medium/Memory 245 may also be used for storing data that is used by the processor 240 when executing software.

Each module 205, 210, 220, 225, 230, 235 may be implemented as a specific circuit or as a software module stored in memory 245 and executed by the processor 240.

**Figure 3** describes the format of a Collective Perception Message (CPM) that may be used in embodiments of the invention.

A Collective Perception Message 300 contains an ITS PDU header 310 and a "CPM Parameters" field 320.

The ITS PDU header 310 includes version information of the protocol used, and a message type. In the illustrated example, this is a CPM message type.

The ITS-S ID (IDentifier) of the originating ITS station (i.e., sending the CPM) may not be indicated in the header but rather in the signature of the message (not shown).

The "CPM Parameters" field 320 may contain a Management Container 330, a Station Data Container 340, a set of optional Sensor Information containers (SIC) 350, a set of optional Perceived Object Containers (POC) 360 and a set of optional Free Space Container (FSC) 380.

The Management Container 330 contains information regarding the type (Station Type) of the originating ITS Station and a reference point (Reference Position - defined in the ETSI 102 894 Standard) of the originating ITS Station.

The Station Data Container 340 depends on whether the originating ITS Station is in a fixed (stationary) position or mobile. In a CPM generated by a mobile ITS station, e.g., vehicles 120, 130, Station Data Container 340 is mandatory and contains dynamic information (e.g., speed, heading and optionally other information such as longitudinal and/or lateral and/or vertical acceleration, yaw rate, pitch/roll angles, ...) of the originating ITS Station. In a CPM generated by a fixed ITS station, e.g., RSU 111, Station Data Container 340 is optional and provides references to identification numbers provided by a MAP (road topology) Message (as defined in CEN ISO/TS 19091:2017) sent by the same originating ITS station (RSU 111).

Each Sensor Information container 350 is optional and provides information about the sensor capabilities of a given sensor of the originating ITS station for example the type of sensor (camera, infrared camera, radar, radio), its field of view (a polygon representing the observed area on a map). More precisely, concerning the type of sensor, eleven specific sensor types are defined such as a radar, camera or lidar sensor up to a system providing fused object information from multiple sensors. A dedicated one, referred to as ITS-S aggregation, corresponds to object information gathered by the radio sensor of the ITS Station from other received ITS messages. For instance, it may be used to operate an aggregation of received CAMs and forward the aggregated information to other ITS stations.

Different container specifications may be used to encode the sensor properties, depending on the station type of the originating ITS station. The Sensor Information containers 350 are attached at a lower frequency than the other containers, as defined in above-mentioned ETSI TR 103 562 specification.

The Perceived Object Containers 360 are provided to report objects that have been perceived by the originating ITS station thanks to its sensors. A Perceived Object Container 360 is made of a sequence of optional or mandatory data elements (DEs) and data frames (DF) which give a detailed description of the dynamic state and properties of the detected (i.e., perceived) object.

As shown through fields 370, the perceived object description information may comprise the following fields:
- an identifier (DE ObjectID),
- a sensorlD (DF_Sensorld) list of IDs of sensors which provides the measurement data
- a time of measurement (DE timeOfMeasurement) corresponding to the time difference elapsed between the measurement time of the provided information and the generation time stated in Management Container 330,
- a distance (DEs xDistance and yDistance) in the x/y plane between the perceived object and the reference point at the time of measurement, and
- a speed (defined by the DEs xSpeed and ySpeed) in the x/y plane of the respective coordinate system with respect to originating ITS station's reference point at the time of measurement,
- acceleration (DEs xAcceleration and yAcceleration) in the x/y plane of the respective coordinate system with respect to originating ITS station's reference point,
- dynamic Status (DE dynamicStatus) providing the capabilities to move off the perceived object ("dynamic", "hasBeenDynami"c, "static"),
- a classification (DF classification) providing the classification of the perceived object. Multi-dimensional classification may be provided along with confidences.

Moreover, distance, speed and acceleration values can also be provided in three dimensions (respectively with the DEs zDistance, zSpeed and zAcceleration fields) along with the yaw angle of the object (DE yawAngle). Furthermore, a three-dimensional description of an object's geometric extension can be provided (with the DEs planarObjectDimension1, planarObjectDimension2 and verticalObjectDimension fields). Moreover, a fixed ITS station (RSU 111) is also able to provide a map-matching result for a particular perceived object with respect to the MAP information (DE matchedPosition).

More specifically, in the context of the invention, according to a first embodiment, the DF classification (represented by the type objectClass) is enhanced with new classes dedicated to Vehicles (VehicleSubclass), VRUs (VRUSubClass) and other ITS-S (OtherSubclass) as described below:

| **Descriptive Name** | objectClass | |
|---|---|---|
| **ASN.1 representation** | ObjectClass ::= SEQUENCE { | |
| | confidence ClassConfidence, | |
| | class CHOICE { | |
| | vehicle | VehicleSubclass, |
| | VRU | VRUSubclass, |
| | other | OtherSubclass |
| | } | |
| | } | |
| **Definition** | Describes the classification of a detected object. The object can be classified into one of three categories: vehicle, VRU and others. The classification is performed with a certain confidence. | |
| | The DF should include the following information: | |
| | • class: the class that best describes the detected object. Each class provides optional subclasses and an associated confidence for the subclass. The class should be set to one of the following | |
| | - vehicles: the detected object is of type vehicle. | |
| | - VRU: the detected object is of type VRU. | |
| | - other: the detected object is of another type. | |
| **Unit** | - | |

As shown in the exemplary table below, the subclass VRUSubclass contains a field referred to as confidence indicating the confidence value of the assigned class for the perceived object, a field referred to as profile corresponding to the VRU profile of the perceived object as defined in ETSI TS 103 300-2 (V0.4.2), a field referred to as cluster (characterized by the DE VRUCluster) corresponding to the description of a VRU cluster as defined in ETSI TS 103 300-2 (V0.4.2) and a field referred to as a group (characterized by the DE VRUGroup) corresponding to the description of a VRU group. The fields 'confidence' and 'profile' are mandatory. The fields 'cluster' and 'group' are optional. If the fields 'cluster' and 'group' are not present, it means that the perceived object is a VRU alone. If the field 'cluster' is set, it means that the perceived object is a VRU cluster. If the field 'group' is set, it means that the perceived object is a VRU group. Both fields 'cluster' and 'group' cannot be set both in the same time.

| **Descriptive Name** | VRUSubClass | | |
|---|---|---|---|
| **ASN.1 representation** | VRUSubClass ::= SEQUENCE { | | |
| | confidence ClassConfidence, | | |
| | profile | VRUProfile, | |
| | cluster | VRUCluster [OPTIONAL], | |
| | group | VRUGroup [OPTIONAL] | |
| | } | | |
| **Definition** | Describes the classification of a VRU object with a certain confidence The DF should include the following information: | | |
| | • confidence | | : the confidence of the assigned class |
| | • profile | | : the VRU profile as defined in ETSI TS 103 300-2 (V0.4.2) |
| | • cluster | | : the description of the VRU cluster as defined in ETSI TS (V0.4.2) 103 300-2 |
| | • group | | : the description of the VRU group as perceived by the originating ITS Station |
| **Unit** | - | | |

As shown in the exemplary table below, the data element VRUProfile indicates the VRU profile as defined in ETSI TS 103 300-2.

| **Descriptive Name** | VRUProfile |
|---|---|
| **ASN.1 representation** | VRUSubClassProfile ::= INTEGER {unknown(0), pedestrian(1), bicyclist(2), motorcyclist(3), animals(4} (0..255) |
| **Definition** | Describes the subclass of a detected object for class persons. Persons are a subset of the vulnerable road users It can be set to one of the following: |
| | • unknown (0): the perceived VRU may correspond to any profile defined in ETSI TS 103 300-2 (V0.4.2) |
| | • pedestrian (1): the perceived VRU corresponds to a pedestrian (VRU profile 1) |
| | • Bicyclist (2) : the perceived VRU corresponds to a bicyclist (VRU profile 2) |
| | • Motorcyclist (3): the perceived VRU corresponds to a Motorcyclist (VRU profile 3) |
| | • Animals (4): the perceived VRU corresponds to an animal presenting a safety risk to other road users (VRU profile 4) |

As shown in the exemplary table below, the DF VRUCluster describes a VRU cluster as defined in ETSI TS 103 300-2. It contains a field referred to as clusterldentifier indicating the identifier of the VRU cluster, a field referred to as clusterDimension indicating the dimension of the VRU cluster and a field referred to as clusterSize indicating the size of the VRU cluster.

| **Descriptive Name** | VRUCluster |
|---|---|
| **ASN.1 representation** | VRUClusterSubClass :: SEQUENCE { |
| | clusterldentifier Identifier[Mandatory] |
| | clusterDimension Dimension[Mandatory] |
| | clusterSize Size[Mandatory] |
| | } |
| **Definition** | Describes the subclass of a VRU cluster The DF shall include the following information: |
| | • clusterldentifier: identifier of the VRU cluster |
| | • clusterDimension: dimension of the VRU cluster |
| | • clusterSize: size of the VRU cluster in terms of number of VRUs |

As shown in the exemplary table below, the DF VRUGroup describes a VRU group. It contains a field referred to as groupldentifier indicating the identifier of the VRU group, a field referred to as groupDimension indicating the dimension of the VRU group and a field referred to as groupSize indicating the size of the VRU group.

| **Descriptive Name** | VRUGroup |
|---|---|
| **ASN.1 representation** | VRUGroupSubClass :: SEQUENCE { |
| | groupldentifier Identifier[Mandatory] |
| | groupDimension Dimension[Mandatory] |
| | groupSize Size[Mandatory] |
| | } |
| **Definition** | Describes the subclass of a VRU cluster The DF shall include the following information: |
| | • groupldentifier: identifier of the VRU group |
| | • groupDimension: dimension of the VRU group |
| | • groupSize: size of the VRU group in terms of number of perceived objects. |

It should be noted that in the above examples, the reference position and speed of a VRU Cluster and a VRU group are not reported in subclass VRUCluster and VRUGroup because they are already set in the fields xDistance, xDistance, xDistance, xSpeed, ySpeed, zspeed of the Perceived Object Container. However, embodiments are not limited thereto and they could be indicated in the subclasses rather than the POC.

According to a second embodiment, the DF classification (represented by the type objectClass) is enhanced with new classes dedicated to Vehicles (VehicleSubclass), VRUs (VRUSubClass), group of perceived objects (ObjectGroupSubClass) and other ITS-S (OtherSubclass) as described below:

| **Descriptive Name** | objectClass | |
|---|---|---|
| **ASN.1** | ObjectClass ::= SEQUENCE { | |
| **representation** | confidence ClassConfidence, | |
| | class CHOICE { | |
| | vehicle | VehicleSubclass, |
| | VRU | VRUSubclass, |
| | objectgroup | ObjectGroupSubClass |
| | other | OtherSubclass |
| | } | |
| | } | |
| **Definition** | Describes the classification of a detected object. The object can be classified into one of four categories: vehicle, VRU, group of perceived objects and others. The classification is performed with a certain confidence. The DF should include the following information: | |
| | • class: the class that best describes the detected object. Each class provides optional subclasses and an associated confidence for the subclass. The class should be set to one of the following | |
| | - vehicle: the detected object is of type vehicle. | |
| | - VRU: the detected object is of type VRU. | |
| | - Objectgroup : the detected object corresponds to a set of detected objects | |
| | - other: the detected object is of another type. | |
| **Unit** | - | |

As shown in the exemplary table below, the subclass VRUSubclass contains a field referred to as confidence indicating the confidence value of the assigned class for the perceived object and a field referred to as profile corresponding to the VRU profile of the perceived object as defined in ETSI TS 103 300-2 (V0.4.2). The fields 'confidence' and 'profile' are mandatory.

| **Descriptive Name** | VRUSubClass |
|---|---|
| **ASN.1 representation** | VRUSubClass ::= SEQUENCE { |
| | confidence ClassConfidence, |
| | profile VRUProfile, |
| | } |
| **Definition** | Describes the classification of a VRU object with a certain confidence The DF should include the following information: |
| | • confidence : the confidence of the assigned class |
| | • profile : the VRU profile as defined in ETSI TS 103 300-2 (V0.4.2) |
| **Unit** | - |

As shown in the exemplary table below, the data element VRUProfile indicates the VRU profile as defined in ETSI TS 103 300-2.

| **Descriptive Name** | VRUProfile |
|---|---|
| **ASN.1 representation** | VRUSubClassProfile ::= INTEGER {unknown(0), pedestrian(1), bicyclist(2), motorcyclist(3), animals(4} (0..255) |
| **Definition** | Describes the subclass of a detected object for class persons. Persons are a subset of the vulnerable road users It can be set to one of the following: |
| | • unknown (0): the perceived VRU may correspond to any profile defined in ETSI TS 103 300-2 (V0.4.2) |
| | • pedestrian (1): the perceived VRU corresponds to a pedestrian (VRU profile 1) |
| | • Bicyclist (2) : the perceived VRU corresponds to a bicyclist (VRU profile 2) |
| | • Motorcyclist (3): the perceived VRU corresponds to a Motorcyclist (VRU profile 3) |
| | • Animals (4): the perceived VRU corresponds to an animal presenting a safety risk to other road users (VRU profile 4) |

The DF ObjectGroupSubClass describes a set of perceived objects. It contains a field referred to as groupldentifier indicating the identifier of the object group, a field referred to as groupDimension indicating the dimension of the object group, a field referred to as groupSize indicating the size of the object group and a field referred to as groupType indicating the type of the object group.

| **Descriptive Name** | objectgroup | |
|---|---|---|
| **ASN.1** | ObjectGroupSubClass :: SEQUENCE { | |
| **representation** | groupldentifier | Identifier[Mandatory] |
| | groupDimension | Dimension[Mandatory] |
| | groupSize | Size[Mandatory] |
| | groupType | ObjectGroupType DEFAULT 0, |
| | } | |
| **Definition** | Describes the subclass of a VRU cluster The DF shall include the following information: | |
| | • groupldentifier: identifier of the object group | |
| | • groupDimension: dimension of the object group | |
| | • groupSize: size of the object group in terms of number of perceived objects. | |
| | • groupType : type of the object group | |

It should be noted that in the above examples, the reference position and speed of an object group is not reported because they are already set in the fields xDistance, xDistance, xDistance, xSpeed, ySpeed, zspeed of the Perceived Object Container. However, embodiments are not limited thereto and they could be indicated in the subclasses rather than the POC.

As shown in the exemplary table below, the DE ObjectGroupType describes the type of an object group.

| **Descriptive Name** | objectGroupType |
|---|---|
| **ASN.1 representation** | ObjectGroupType :: INTEGER { unknown(0), vruCluster(1), pedestrianGroup (2), bicyclistGroup (3), motorcyclistGroup (4), animalsGroup (5), heterogeneousGroup (6)} (0..255) |
| **Definition** | Describes the type of a detected object group. It can be set to one of the following: |
| | • unknown(0) : the detected object group contains perceived objects not corresponding to any classification defined in ETSI TS 103 300-2 and ETSI TS 103 324 |
| | • vruCluster(1) : the detected object group is a VRU cluster as defined in ETSI TS 103 300-2 (V0.4.2) |
| | • pedestrianGroup (2) : the detected object group is a group of pedestrians (VRU profile 1) |
| | • bicyclistGroup (3) : the detected object group is a group of bicyclists (VRU profile 2) |
| | • motorcyclistGroup (4) : the detected object group is a group of motorcyclists (VRU profile 3) |
| | • animalsGroup (5) : the detected object group is a group of animals (VRU profile 4) |
| | • heterogeneousGroup (6) : the detected object group is an heterogenous group composed of objects with different profiles (pedestrian, bicyclist, motorcyclist, animals) |

According to third and fourth embodiments, the DFs objectClass, VRUSubClass and ObjectGroupSubClass and the DE VRUProfile are the same as the second embodiment, but the DE ObjectGroupType which describes the type of an object group no longer contains a type vruCluster as shown in the exemplary table below:

| **Descriptive Name** | objectGroupType |
|---|---|
| **ASN.1 representation** | ObjectGroupType :: INTEGER { unknown(0), pedestrianGroup (1), bicyclistGroup (2), motorcyclistGroup (3), animalsGroup (4), heterogeneousGroup (5)} (0..255) |
| **Definition** | Describes the type of a detected object group. It can be set to one of the following: |
| | • unknown(0) : the detected object group contains perceived objects not corresponding to any classification defined in ETSI TS 103 300-2 and ETSI TS 103 324 |
| | • pedestrianGroup (1) : the detected object group is a group of pedestrians (VRU profile 1) |
| | • bicyclistGroup (2) : the detected object group is a group of bicyclists (VRU profile 2) |
| | • motorcyclistGroup (3) : the detected object group is a group of motorcyclists (VRU profile 3) |
| | • animalsGroup (4) : the detected object group is a group of animals (VRU profile 4) |
| | • heterogeneousGroup (5) : the detected object group is an heterogenous group composed of objects with different profiles (pedestrian, bicyclist, motorcyclist, animals) |

According to these third and fourth embodiments, a VRU cluster is reported by assigning in the Perceived objectContainer 360, a value sensorlD which references a Sensor Information container 350 with a specific type of sensor (DE_SensorType).

According to this third embodiment, a VRU cluster is reported in a CPM by referencing a Sensor Information container of type "ITS-S aggregation".

According to this fourth embodiment, a new type of sensor is defined, referred to as "radio", corresponding to onboard radio sensors as V2X modem used to receive in particular ITS messages. In such a case, a new value not yet assigned is added in the data element DE_SensorType corresponding to the "radio" sensor.

According to this fourth embodiment, a VRU cluster is reported in a CPM by referencing a Sensor Information container of type "radio".

According to these third and fourth embodiments, a VRU cluster is described by a Perceived Object Container 360 (setting with DFs objectClass, VRUSubClass and ObjectGroupSubClass and DEs VRUProfile and ObjectGroupType as described) and referencing (with the DF sensorlD) a Sensor Information Container 350 setting with a data element DE_SensorType setting as described by the third embodiment "ITS-S aggregation" or the fourth embodiment "radio".

According to these third and fourth embodiments, a VRU group is not a cluster if it does not reference in its field SensorlD any sensor of type "ITS-S aggregation" in the third embodiment or any sensor of type "radio" in the fourth embodiment.

According to a fifth embodiment, the DFs objectClass, VRUSubClass, the DE VRU Profile and objectGroupType are the same as the third embodiment but the DE ObjectGroupSubClass contains a new optional field clusterldentifier .as shown in the exemplary table below.

| **Descriptive Name** | objectgroup | |
|---|---|---|
| **ASN.1 representation** | ObjectGroupSubClass :: SEQUENCE { | |
| | groupldentifier | Identifier[Mandatory] |
| | groupDimension | Dimension[Mandatory] |
| | groupSize | Size[Mandatory] |
| | groupType | ObjectGroupType DEFAULT 0, |
| | clusterldentifier | Identifier[Optional] |
| | } | |
| **Definition** | Describes the subclass of a VRU cluster | |
| | The DF shall include the following information: | |
| | • groupldentifier: identifier of the object group | |
| | • groupDimension: dimension of the object group | |
| | • groupSize: size of the object group in terms of number of perceived objects. | |
| | • groupType : type of the object group | |
| | • clusterldentifier: identifier of the VRU cluster | |

According to the fifth embodiment, a VRU cluster is reported in a CPM by indicating the VRU cluster identifier.

According to the fifth embodiment, a VRU group is not a cluster if it does not indicate a clusterldentifier.

**Figure 4** describes the format of a VRU Awareness Message (VAM) that may be used in embodiments of the invention.

A VAM 400 contains an ITS PDU header 410 and a "VAM Parameters" field 420.

The ITS PDU header 410 includes a VRU identifier of the originating ITS station (i.e., VRU sending the VAM).

The VAM Parameters field 420 contains a Basic Container 430 and optionally a VRU cluster Head Container 440.

The Basic Container 430 comprises the list 435 of the following fields:
- a VRU Position [mandatory] indicating the position of the originating VRU ITS-S,
- a VRU Generation time [mandatory] indicating time corresponding to the time of the position (VRU position field) in the VAM,
- a VRU Profile [mandatory] indicating the profile of the originating VRU ITS-S. 4 VRU profiles are defined in ETSI TS 103 300-2 (V0.4.2) : pedestrian (VRU profile 1), bicyclist (VRU profile 2), motorcyclist (VRU profile 3) and animals (VRUprofile 4),
- a VRU Type indicating the type of the VRU as infant, animal, adult, child, etc.,
- a VRU size class [mandatory if outside a VRU cluster, optional if inside a VRU cluster] indicating the size of the originating VRU ITS-S,
- a VRU weight class [mandatory if outside a VRU cluster, optional if inside a VRU cluster] indicating the weight of the originating VRU ITS-S,
- a VRU speed [mandatory] indicating the speed of the originating VRU ITS-S,
- a VRU Direction [mandatory] indicating the direction of the originating VRU ITS-S,
- a VRU Orientation [mandatory] indicating the orientation of the originating VRU ITS-S.

The VRU Cluster Head Container 440 comprises the list 445 of the following fields:
- a VRU cluster identifier indicating the identifier of the reported VRU cluster,
- a VRU cluster reference position indicating the reference position of the reported VRU cluster,
- a VRU cluster dimension indicating the dimension of the reported VRU cluster,
- a VRU cluster size indicating the size of the reported VRU cluster.

It should be noted that the organisation of the fields illustrated in this figure is not limitative and the fields could be organized in a different way in some embodiments.

**Figure 5** illustrates, using flowcharts, steps of a communication method for reporting a set of VRUs using a CPM according to first embodiments.

The names of the lists and elements which appear in the following description are provided only for illustration purpose. Embodiments are not limited thereto and other names could be used.

**Figure 5a** shows steps that may be performed by an ITS station (called "ego ITS station" or "originating ITS station"), typically at RSU level (e.g., RSU 111 shown in Figure 1) or at vehicle level (e.g., Vehicle ITS-S 181 in Figure 1 including a set of sensors, such as camera, radar, and/or lidar.

In this example, the originating ITS station generates periodically CPMs with a rate that may be controlled by the Collective Perception service, as described in ETSI TS 103 324.

When the ITS station has to generate a CPM (step 500), it selects a list of perceived objects provided by its set of embedded perception sensors 215. The list of perceived objects is referred to as Ist_cpm_objects. For each element of this list, the originating ITS station may retrieve the dynamic state and properties of the perceived object, the associated embedded perception sensor (corresponding to the sensor which has perceived the object) and for each embedded perception sensor, a corresponding sensor information.

At next step 510, the originating ITS station selects in the list Ist_cpm_objects only the perceived objects categorized as VRU, e.g., as defined in ETSI TS 103 300-2. The resulting list of perceived VRU is referred to as Ist_vru_cpm_object.

At next step 515, the originating ITS station retrieves (from its computer-readable Medium/Memory 215) a list of VRU clusters described in a VAM (received by the originating ITS station), referred to as Ist_vru_clusters. More specifically, at each reception of a VAM from a VRU, the originating ITS station checks whether this VAM contains a VRU Cluster Head Container. If so, it means that a VRU cluster is in its wireless coverage and the originating ITS station stores the information in its computer-readable Medium/Memory 215.

At next step 520, the originating ITS station generates (identifies) VRU groups based on the list Ist_vru_cpm_object. According to embodiments, the group generation may be performed using a rule similar to the VRU cluster joining condition defined in ETSI TS 103 300-2, which is currently the following one: a VRU may join a VRU cluster whether its distance is less than 3-5 meters of the VRU cluster and its speed difference with the speed of the VRUs is less than 5%. Hence, according to embodiments, the rule used to determine whether VRUs should belong to a same group (called "VRU group generation condition") may be the following one: two VRUs belongs to the same VRU group if their distance is less than a predetermined threshold, e.g., 3-5 meters and the speed difference between them is less than a predetermined threshold, e.g., 5%. Embodiments of the present invention are not limited to this grouping rule and other rules may be considered.

During this step, the originating ITS station also computes a distance and a speed between the elements of the Ist_vru_cpm_object and generates VRU groups according to the VRU group generation condition.

The output of step 520 is thus a list of VRU groups referred to as Ist_vru_groups. It should be noted that a VRU group generated using this rule contains at least two elements. The elements that are alone (i.e., that do not satisfy the grouping rule) are stored in a list referred to as Ist_vru_alone. For each VRU group, a size, a reference position, a dimension and a speed may be considered. As previously mentioned, the size corresponds to the number of VRUs inside the VRU group. The dimension corresponds to the geometry of the geographical area, including at least the bounding boxes of all VRUs. The speed may correspond to the mean of the VRU speeds of the VRUs inside the VRU group. The reference position may be the ground position at the center point of the face side of the first VRU bounding box as defined in ETSI TS 103 300-2. Obviously, it is not limitative and other computations can be applied to determine reference position, dimension and speed of a VRU group.

At next step 525, the originating ITS station reports each VRU group of the list Ist_vru_groups generated at step 520 inside a CPM to be generated. It means that for each one, a perceived object container may be assigned as follows:
- The field classification (type ObjectClass) of the perceived object container is assigned with a field class set to VRUSubClass,
- The field group (type VRUGroup) of the considered VRUSubClass is assigned,
- The fields groupDimension and groupSize of the considered VRUGroup are directly set to the features of the VRU group computed at step 520.
- The field groupldentifier of the considered VRU group is set according to the procedure described below.

In order to assign the group identifier, a VRU group association is firstly performed between two CPM generations in order to track and distinguish new and existing VRU groups. Let g_vru(n) be a given VRU group from the list of VRU groups generated at step 520 at the current CPM generation n, and let g_vru(n-1) be a given VRU group from the list of VRU groups generated at step 520 at the previous CPM generation (n-1). It is considered that two groups g_vru(n-1) and g_vru(n) are the same if the number of identical VRUs between them is more than a predetermined similarity threshold. Otherwise, they do not correspond to a same group. Based on its computation, if a given VRU group g_vru(n) has no correspondence with any group of the previous generation, a new group identifier is assigned to g_vru(n). Otherwise, if there is a correspondence with a group g_vru (n-1) of a previous generation which has a given group identifier, it is assigned to g_vru(n).

Moreover, in these embodiments, the reference position and speed of the VRU group is set in the fields xDistance, xDistance, xDistance, xSpeed, ySpeed, zspeed of the Perceived Object Container. However, embodiments are not limited thereto.

At next step 530, the originating ITS station reports each VRU Cluster of the list Ist_vru_clusters stored in the computer-readable Medium/Memory 215 and retrieved at step 515, in the CPM. For this purpose, a perceived container may be assigned with:
- The field classification (type ObjectClass) of the perceived object container is assigned with a field class set to VRUSubClass,
- The field cluster (type VRUCluster) of the considered VRUSubClass is assigned,
- The fields clusterldentifier, clusterDimension and clusterSize of the considered VRUCluster are directly set to the features of the VRU cluster.

At next step 545, the originating ITS station finalizes the generation of the CPM and sends it. During this step, it also generates a Perceived Object container for each VRU alone contained in the list Ist_vru_alone_group.

**Figure 5b** shows steps that may be performed by an ITS station (hereafter called "ego VRU"), typically at VRU level (such as VRUs 130, 140, 150, 160 and 170 shown in Figure 1).

Upon reception of a CPM (step 550) by the ego VRU, it retrieves the Perceived Object containers corresponding to VRU groups (step 560). The corresponding VRU groups are stored in a list referred to as Ist_vru_groups.

At next step 565, the ego VRU checks whether it already belongs to a VRU cluster, referred to as ego_VRU_cluster. If so, the ego VRU implements step 570. If not, step 575 is implemented instead.

It should be noted that a VRU knows whether it belongs to a VRU cluster because it previously chose to join a VRU cluster and lets the head VRU of this cluster to send VAM for the whole cluster instead of each VRU.

At step 570, the ego VRU checks whether or not it is necessary to operate an update of the current state of its own VRU cluster ego_VRU_cluster. To do so, it checks whether the received CPM contains a Perceived Object Container corresponding to its VRU cluster identifier. If so, it retrieves the current state of the VRU cluster corresponding to the current reference position, current dimension and current speed. Based on it, it operates an update if necessary. The decision to perform or not an update is taken depending on the result of a test based on a rule called 'VRU Cluster staying condition'. According to embodiments, it is tested if the position of the VRU is inside the area corresponding to the VRU Cluster (characterized by the reference position and the dimension of the VRU cluster) and if the difference between the speed of the ego VRU and the speed of the VRU cluster is less than a predetermined threshold, e.g., 5%. Embodiments of the present invention are not limited to this rule and other rules may be considered.

If the VRU Cluster staying condition is not fulfilled, the ego VRU operates a VRU cluster update (step 570) which consists in leaving the current VRU Cluster. Otherwise, the ego VRU stays in its VRU cluster and updates the current state of its VRU cluster with the values (speed, reference position, and dimension) contained in the received CPM.

At next step 575, the ego VRU checks whether it is in a VRU group.
To do so, the ego VRU checks a 'VRU group belonging condition' for each group of the list Ist_vru_groups included in the received CPM. According to embodiments, the VRU group belonging condition is that the ego VRU belongs to a VRU group if it is inside the geographic area corresponding to the VRU group (characterized by the reference position and the dimension of the VRU group) and its speed difference with the speed of the VRU group is less than a predetermined threshold, e.g., 5%. If this condition is fulfilled for the ego VRU, the corresponding group is memorized as ego_VRU_group, and the ego VRU goes to the next step 580. If none of the condition is fulfilled by none of the groups for the ego VRU, the algorithm stops there (step 590).

At step 580, the ego VRU may operate a VRU Cluster update according to the retrieved list of VRU groups, if necessary. According to embodiments, it is assumed that there is a higher confidence in the current states of the VRU groups than those of the VRU clusters. This is why the new VRU joining condition and the VRU Cluster staying condition may be defined based on the current state of the VRU groups.

More specifically, if the ego VRU does not belong to an existing VRU cluster, it identifies the closest VRU cluster of its VRU group ego_VRU_group, referred to as idenfied_VRU_Cluster based on a distance computed based the cluster/group features -reference position, dimension, size, speed - of VRU groups and VRU clusters using known methods. If the distance between the VRU group ego_VRU_group and the VRU cluster identified_VRU_Cluster is above a predetermined threshold, no correspondence is found, and the algorithm stops. Otherwise, a VRU cluster joining condition is checked. For instance, the VRU cluster joining condition can be defined as follows: a VRU may join a VRU cluster whether it is inside the area corresponding to a VRU group (characterized by the reference position and the dimension of the VRU group) and its speed difference with the speed of the VRU group is less than 5%. Embodiments of the present invention are not limited to this rule and other VRU cluster joining conditions may be considered. If the VRU cluster joining condition is fulfilled, the ego VRU joins the VRU cluster identified_VRU_Cluster. Otherwise, the algorithm stops.

Otherwise, if the ego VRU belongs to an existing VRU cluster, a VRU cluster staying condition is checked to identify whether the VRU group ego_VRU_group and the VRU cluster ego_VRU_cluster still correspond. The VRU cluster staying condition may be defined as follows: if the distance between the VRU group ego_VRU_group and the VRU cluster ego_VRU_cluster is below a given threshold then the condition is fulfilled. Otherwise, it is not. The distance is computed based the cluster/group features - reference position, dimension, size, speed - of VRU groups and VRU clusters using known methods. Embodiments of the present invention are not limited to this rule and other VRU cluster joining and VRU cluster staying conditions may be considered. If the VRU cluster staying condition is fulfilled, the ego VRU stays in its VRU Cluster ego_VRU_cluster and updates the current state (reference position, dimension, speed) of its VRU cluster ego_VRU_cluster. If not, VRU leaves its VRU cluster ego_VRU_cluster.

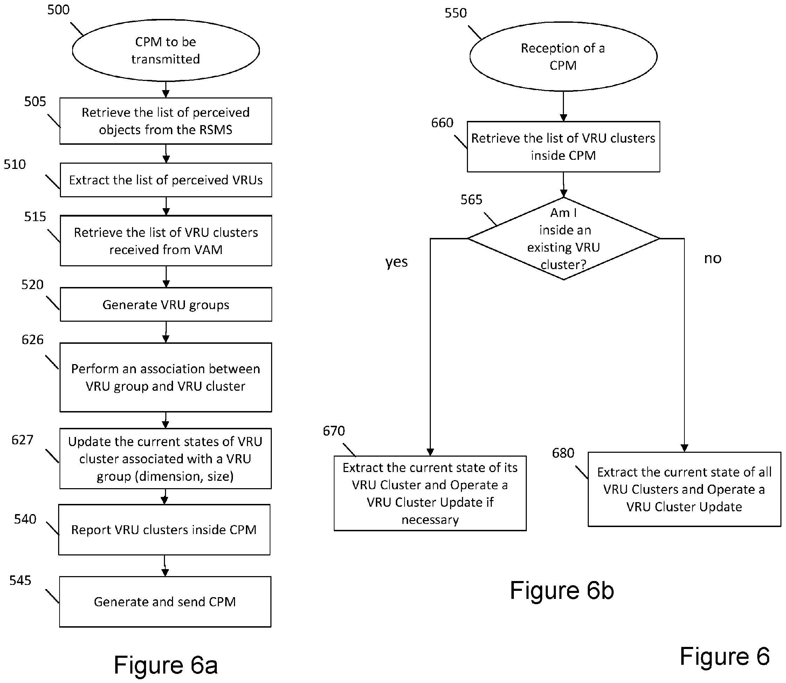

**Figure 6** illustrates, using flowcharts, steps of a communication method for reporting a set of VRUs using a CPM, according to second embodiments.

The names of the lists and elements which appear in the following description are provided only for illustration purpose. Embodiments are not limited thereto and other names could be used.

**Figure 6a** shows steps that may be performed by an ITS station (called "ego ITS station" or "originating ITS station"), typically at RSU level (e.g., RSU 111 shown in Figure 1) or at vehicle level (e.g., Vehicle ITS-S 181 in Figure 1) including .a set of sensors, such as camera, radar, and/or lidar.

Steps 500 to 520 are the same as in the first embodiments described with reference to Figure 5a.

At next step 626, the originating ITS station performs an association procedure between the list of VRU clusters Ist_vru_clusters and the list of VRU groups Ist_vru_groups. More specifically, for each VRU cluster of the list VRU clusters (vru_cluster), the closest VRU group of the list Ist_vru_groups is identified (min_vru_group) based on a distance computed from the cluster/group features - reference position, dimension, size, speed, similarly to what is done in step 580 by the ego VRU. If the distance between vru_cluster and min_vru_group is below a predetermined threshold (e.g., less than 2 meters), vru_cluster and min_vru_group are considered associated. Otherwise there are not.

At next step 627, the originating ITS station updates the current state of each VRU cluster of the list Ist_vru_clusters which has an associated VRU group at the end of step 626. In such a case, the current state of the VRU cluster is updated with the current state of its associated VRU group.

Next, step 540 reports the VRU clusters in a CPM with the current state updated at step 625 and next, step 545 generates and sends CPM as described above for the first embodiments.

**Figure 6b** shows steps that may be performed by an ITS station (hereafter called "ego VRU"), typically at VRU level (such as VRUs 130, 140, 150, 160 and 170 shown in Figure 1).

Upon reception of a CPM (step 550) by the ego VRU, it retrieves the Perceived Object containers corresponding to VRU clusters (step 660). The corresponding VRU clusters are stored in a list referred to as Ist_vru_ clusters.

Next step 565 is similar to the first embodiments. During this step, the ego VRU checks whether it already belongs to a VRU cluster, referred to as ego_VRU_cluster. If so, the ego VRU implements step 670. If not, step 680 is implemented instead.

At step 670, the ego VRU extracts the perceived Object container corresponding to its VRU Cluster (identified by the field clusterldentifier) and checks a VRU cluster staying condition in order to determine whether it must stay or leaves its VRU cluster. According to embodiments, the VRU cluster staying condition may be defined as follows: if the position of the ego VRU is inside the area corresponding to its VRU cluster characterized by the reference position and the dimension of the VRU cluster and the difference between the speed of the perceived VRU and the speed of its VRU cluster is less than a predetermined threshold, e.g., 5%, the condition is fulfilled. Otherwise it is not. Embodiments of the present invention are not limited to this condition and other conditions may be considered.

If the condition is fulfilled, the ego VRU stays in its VRU Cluster and updates the current state (speed, reference position, and dimension) of its VRU cluster with the values indicated in the received CPM. Otherwise, the ego VRU leaves its VRU cluster.

At step 680, the ego VRU extracts the current state of all VRU Clusters of the list Ist_vru_clusters and checks a VRU cluster joining condition in order to determine whether it may join a VRU cluster. According to embodiments, the VRU cluster joining condition can be defined as follows: if the position of the ego VRU is inside the area corresponding to a given VRU cluster characterized by the reference position and the dimension of the VRU cluster and the difference between the speed of the perceived VRU and the speed of the given VRU cluster is less than 5%, the condition is fulfilled. Otherwise it is not. Embodiments of the present invention are not limited to this condition and other conditions may be considered.

If the VRU cluster joining condition is fulfilled for a given VRU cluster of the list Ist_vru_clusters, the ego VRU joins the corresponding VRU Cluster.

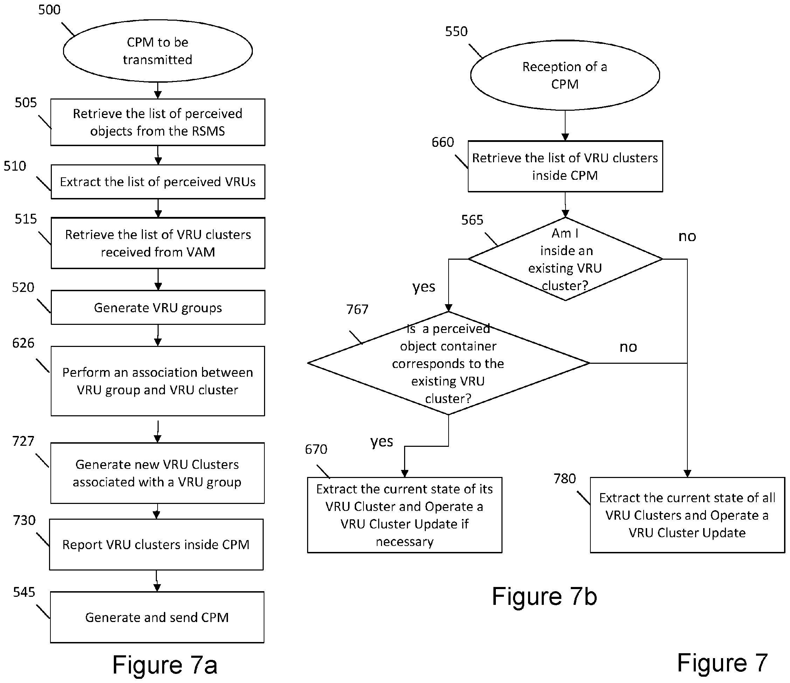

**Figure 7** illustrates, using flowcharts, steps of a communication method for reporting a set of VRUs using a CPM according to third embodiments.

The names of the lists and elements which appear in the following description are provided only for illustration purpose. Embodiments are not limited thereto and other names could be used.

**Figure 7a** shows steps that may be performed by an ITS station (called "ego ITS station" or "originating ITS station"), typically at RSU level (e.g., RSU 111 shown in Figure 1) or at vehicle level (e.g., Vehicle ITS-S 181 in Figure 1) including a set of sensors, such as camera, radar, and/or lidar.

Steps 500 to 520 are the same as in the first embodiments described with reference to Figure 5a.

Step 626 is the same as in the second embodiments described with reference to Figure 6a.

At next step 727, the originating ITS station generates new VRU cluster(s) for each VRU cluster of the Ist_vru_clusters which have an associated VRU group according to step 626. Its current state (speed, reference position, and dimension) is set with the current state (speed, reference position, and dimension) of its associated VRU group. Its VRU cluster identifier clusterldentifier is set with an identifier not yet assigned. Finally, the corresponding perceived object container is generated.

At next step 730, the originating ITS station reports through a CPM the new VRU cluster(s) generated at step 630 and if appropriate, depending on the remaining free place in CPM to be transmitted, the other VRU clusters (not associated with a VRU group).

The CPM is then sent (step 545).

**Figure 7b** shows steps that may be performed by an ITS station (hereafter called "ego VRU"), typically at VRU level (such as VRUs 130, 140, 150, 160 and 170 shown in Figure 1).

Upon reception of a CPM (step 550) by the ego VRU, it retrieves the Perceived Object containers corresponding to VRU clusters (step 660). The corresponding VRU clusters are stored in a list referred to as Ist_vru_clusters.

Next step 565 is similar to the first embodiments. During this step, the ego VRU checks whether it already belongs to a VRU cluster, referred to as ego_VRU_cluster. If so, the ego VRU implements step 767. If not, step 780 is implemented instead.

At step 767, the ego VRU checks whether a perceived object container corresponds to its VRU cluster. If so, the ego VRU implements step 670 as in the second embodiments described with reference to Figure 6b. Otherwise, the algorithm goes to step 780.

At step 780, the ego VRU extracts the current state of all VRU Clusters of the list Ist_vru_clusters and checks a VRU cluster switching condition in order to determine whether it must switch from its VRU cluster (if it is inside a VRU cluster) to another VRU cluster. According to embodiments, the VRU cluster switching condition can be defined as follows: if the position of the ego VRU is inside the area corresponding to a given VRU cluster characterized by the reference position and the dimension of the VRU cluster and the difference between the speed of the perceived VRU and the speed of the given VRU cluster is less than a predetermined threshold, e.g., 5%, the condition is fulfilled. Otherwise it is not. Embodiments of the present invention are not limited to this condition and other conditions may be considered. If the VRU cluster switching condition is fulfilled for a given VRU cluster of the list Ist_vru_clusters, the ego VRU leaves its current VRU cluster (if it is inside a VRU cluster) and joins the given VRU Cluster.

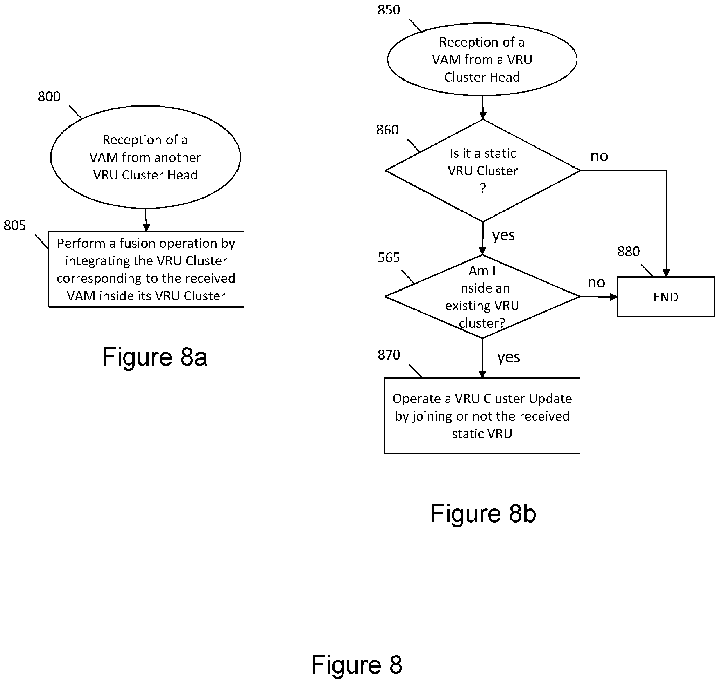

**Figure 8** illustrates, using flowcharts, steps of a communication method for reporting a set of VRUs using a VAM according to fourth embodiments.

The names of the lists and elements which appear in the following description are provided only for illustration purpose. Embodiments are not limited thereto and other names could be used.

**Figure 8a** shows steps that may be performed by an ITS station (called "ego ITS station" or "originating ITS station"), typically by a static VRU cluster head. A static VRU cluster head is an ITS station which always acts as VRU cluster head. The VRU cluster head may be a VRU with a special role for example a teacher with a group of children or it may a be a RSU: for example a RSU associated with a traffic light for signalling people who will use a pedestrian crossing.

At the system initialization, a VRU cluster is generated with a given and fixed cluster identifier clusterldentifier. It is never dissolved (Cluster breaking down action). So the VRU cluster head has its own VRU cluster referred to as static VRU cluster, which has a given and fixed cluster identifier clusterldentifier. According to an embodiment of the invention, the clusterldentifier is set to zero, the smallest possible value. According to another embodiment of the invention, it is set to the biggest value. For instance, if the clusterldentifier is coded on one byte, its value is equal to 255. The ego ITS station sends periodically and continuously VAMs with a VRU Cluster Head Container as soon as other VRUs join its VRU cluster.

According to another embodiment of the invention, the ego ITS station may manage several static VRU clusters. In particular, it may assign a static VRU cluster for each VRU profile defined in ETSI TS 103 300-2. In such a case, a given VRU cluster identifier clusterldentifier is given (0,1,2,3,4 for instance if the smallest values are chosen) which are reserved and shall not be assigned by the VRU cluster forming operation defined in the standard ETSI TS 103 300-2. Moreover, the speed of each static VRU cluster corresponds to the typical value in operation defined for the considered profile in ETSI TS 103 300-2.

Upon reception of a VAM from another VRU Cluster Head (VAM containing a VRU Cluster Head Container), the ego ITS station performs a fusion (merge) operation (step 805) by integrating the VRU Cluster corresponding to the received VAM inside its VRU Cluster, referred to as received VRU cluster. For instance, the fusion operation consists in updating the current state of the static VRU Cluster. Its reference position and its identifier are not modified. Its size is updated by adding the size of the received VRU cluster. Its dimension is updated by computing the dimension of the union between the area corresponding to its VRU cluster (based on its reference position and its dimension) and the area corresponding to the received VRU cluster (based on its reference position and its dimension). Its speed is updated by taking the speed of the received VRU cluster weighted with the size of the received VRU cluster. Embodiments are not limited to these updating rules.

**Figure 8b** shows steps that may be performed by an ITS station (hereafter called "ego VRU"), typically at VRU level (such as VRUs 130, 140, 150, 160 and 170 shown in Figure 1).

Upon reception of a VAM from a VRU cluster head (850), the ego VRU checks at step 860 whether it corresponds to a static VRU cluster or not. A static VRU is identified by its identifier (smallest or biggest value according to the embodiment of the invention). If so, next step is 565. If not, the algorithm stops (step 880).

At step 565, the ego VRU checks whether it is already in a VRU Cluster (called current VRU cluster) as in the first embodiments. If so, the next step is 870. If not, the algorithm stops (step 880).

At next step 870, the ego VRU checks whether its VRU cluster has been merged with the static VRU cluster. According to embodiments, the VRU cluster merging condition can be defined as it: if the area corresponding to its current VRU cluster (characterized by the reference position and the dimension of its current VRU cluster) is contained in the area corresponding to received static VRU cluster (characterized by the reference position and the dimension of the received static VRU cluster) and the difference between the speed of the current VRU cluster and the speed of the static VRU cluster is less than 5%, the condition is fulfilled. Otherwise it is not. Embodiments of the present invention are not limited to this condition and other conditions may be considered. If the VRU cluster merging condition is fulfilled, the ego ITS station leaves its current VRU cluster and joins the received static VRU cluster.

Although the present invention has been described herein above with reference to specific embodiments, the present invention is not limited to the specific embodiments, and modifications will be apparent to a skilled person in the art which lie within the scope of the present invention.

Many further modifications and variations will suggest themselves to those versed in the art upon referring to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A communication method in an Intelligent Transport System, ITS, comprising ITS stations, the method comprising the following steps, at an ITS station:
receiving a Collective Perception Message, CPM, from another ITS station of the ITS, said CPM including a first set of Vulnerable Road Users, VRUs, the first set being associated with properties;
determining that the ITS station belongs to the first set of VRUs;
obtaining the properties of said first set of VRUs;
comparing the obtained properties with properties of the ITS station; and, as a result,
updating said first set of VRUs.

2. The communication method of Claim 1, wherein the comparing step comprises comparing the location of the ITS station with the location of the first set of VRUs and/or comparing the speed of the ITS station with the speed of the first set of VRUs.

3. The communication method of Claim 2, wherein if the difference between the obtained properties and the properties of the ITS station is superior to a predetermined threshold, the updating includes leaving the first set of VRUs.

4. The communication method of Claim 2 or 3, wherein the ITS station locally stores properties of the first set of VRUs to which it belongs, wherein if the difference between the obtained properties and the properties of the ITS station is inferior or equal to a predetermined threshold, the updating includes updating the locally stored properties with the properties values included in the CPM.

5. The communication method of one of claims 1 to 4, wherein the first set of VRUs is represented by a VRU header, the VRU header being the only ITS station of the first set allowed to send a VRU Awareness Message, VAM, over the ITS.

6. The communication method according to one of claims 1 to 5, wherein the CPM further includes a second set of Vulnerable Road Users, VRUs, identified from data captured by a sensor connected to or belonging to the other ITS station.

7. A communication method in an Intelligent Transport System, ITS, comprising ITS stations, the method comprising the following steps, at an ITS station:
receiving a VRU Awareness Message, VAM, sent by a VRU, the VAM describing a first set of VRUs;
identifying a second set of Vulnerable Road Users, VRUs, from data captured by a sensor connected to or belonging to the ITS station; and,
transmitting a Collective Perception Message, CPM, to other ITS stations of the ITS, including information on the first and second sets of VRUs.

8. The communication method according to claim 7, wherein said information includes a list of VRUs belonging to the first set and a list of VRUs belonging to the second set.

9. The communication method according to claim 7 or 8, further including:
determining a distance between the first set and the second set of VRUs, wherein said information is based on the determined distance.

10. The communication method according to claim 9, wherein determining a distance comprises comparing the location of a VRU with the location of the first set of VRUs and/or comparing the speed of a VRU with the speed of the first set of VRUs.

11. The communication method according to claim 9 or 10, further including:
updating the description of the first set of VRUs based on the determined distance, wherein said information includes the updated description.

12. A computer program product for a programmable apparatus, the computer program product comprising instructions for carrying out each step of the method according to any one of claims 1 to 6 or to any one of claims 7 to 11 when the program is loaded and executed by a programmable apparatus.

13. A non-transitory information storage device storing instructions of a computer program for implementing the method according to any one of claims 1 to 6 or to any one of claims 7 to 11.

14. An ITS station of an Intelligent Transport System, the ITS station comprising a microprocessor configured for carrying out the steps of:
receiving a Collective Perception Message, CPM, from another ITS station of the ITS, said CPM including a first set of Vulnerable Road Users, VRUs, the first set being associated with properties;
determining that the ITS station belongs to the first set of VRUs;
obtaining the properties of said first set of VRUs;
comparing the obtained properties with properties of the ITS station; and, as a result,
updating said first set of VRUs.

15. An ITS station of an Intelligent Transport System, the ITS station comprising a microprocessor configured for carrying out the steps of:
receiving a VRU Awareness Message, VAM, sent by a VRU, the VAM describing a first set of VRUs;
identifying a second set of Vulnerable Road Users, VRUs, from data captured by a sensor connected to or belonging to the ITS station; and,
transmitting a Collective Perception Message, CPM, to other ITS stations of the ITS, including information on the first and second sets of VRUs.
